# EUROPEAN PATENT SPECIFICATION

(11) **EP 2 823 240 B1**
(45) Date of publication and mention of the grant of the patent: **14.11.2018**
(21) Application number: 12870829.4
(22) Date of filing: 08.03.2012
(51) Int. Cl.: F25B 13/00, F25B 1/053, F04D 25/06, F04D 27/00, F04D 29/048, F04D 17/12, F25B 1/10, F04D 29/46

(54) **HIGH PRESSURE RATIO MULTI-STAGE CENTRIFUGAL COMPRESSOR**
MEHRSTUFIGER ZENTRIFUGALKOMPRESSOR MIT HOHEM DRUCKVERHÄLTNIS
COMPRESSEUR CENTRIFUGE À ÉTAGES MULTIPLES À RAPPORT DE PRESSION ÉLEVÉ

(43) Date of publication of application: 14.01.2015
(73) Proprietor: Danfoss A/S, 6430 Nordborg (DK)
(72) Inventor: SUN, Lin, Tallahassee, Florida 32312 (US); BRASZ, Joost, Fayetteville, New York 13066 (US)
(74) Representative: Rankin, Douglas
(86) International application number: PCT/US2012/028221
(87) International publication number: WO 2013/133832

(56) References cited:
- DE-T2- 69 425 891
- US-A- 4 232 533
- US-A- 4 739 628
- US-A- 4 739 628
- US-A- 6 129 511
- US-A- 6 129 511
- US-A1- 2007 065 300
- US-A1- 2007 065 300
- US-A1- 2009 205 360
- US-A1- 2009 205 360

## Description

### BACKGROUND

This disclosure relates to a multi-stage centrifugal compressor for use in a high pressure ratio multi-stage centrifugal compressor having a first and a second variable geometry diffuser.

Existing single-stage and two-stage centrifugal refrigeration compressors, with vaneless or vaned diffusers, typically have at least one set of variable inlet guide vanes at a compressor inlet to regulate compressor capacity during various operating conditions.

Variable-speed centrifugal compressors use speed variation as their primary capacity control mechanisms, but such compressors still need variable inlet guide vanes in order to operate surge-free at low capacity conditions.

Multi-stage centrifugal compressors have used stages with fixed, typically vaneless, diffusers with inlet guide vanes and variable speed as the capacity control mechanism. Single-stage refrigerant compressors have been introduced that employ a variable frequency drive (VFD) for capacity control in addition to a set of rotatable inlet guide vanes upstream of the impeller. In the case of a variable speed capability, a variable-geometry diffuser has been used downstream from the impeller to improve the compressor surge characteristics at part-load operating conditions.

Heat pump systems require compressors having high pressure ratios. Typically, screw-type or scroll-type compressors are used provide the needed high pressures of heat pump systems.

US 4,739,628 discloses a heat pump system according to the preamble of claim 1. This document describes heat pump systems having indoor and outdoor heat exchangers, at least two compressors, and conduit connections including associated compressor selector and change over valves operable to control the direction of flow of fluid medium through the heat exchangers from the compressors. There is also described a novel construction of a centrifugal compressor for use in the heat pump system including a compressor having a housing with rotatable structure mounted therein, the rotatable structure having a pump portion for sucking fluid medium into the compressor and least three spaced wall members with convoluted fins positioned therebetween that direct the incoming fluid medium radially outwardly while accelerating the velocity of the medium and thereafter radially inwardly while retarding the velocity of the medium, and if necessary repeating this process several times or more.

### SUMMARY

According to the present invention there is provided a heat pump system having the features of claim 1.

A heat pump system includes a refrigerant circuit. First and second heat exchangers are arranged in the refrigerant circuit. A flow reversing device selectively changes a direction of flow in the refrigerant circuit between the first and second heat exchangers. A centrifugal compressor is arranged in the fluid circuit and has first and second impellers arranged in series relative to one another to provide a desired compressor pressure ratio.

In one example, the centrifugal compressor mounts the first and second impellers on opposing ends of a shaft. The first and second impellers respectively include first and second stage inlets and outlets. One example desired compressor pressure ratio of at least 10:1 corresponds to a second stage outlet pressure to a first stage inlet pressure. A first diffuser is arranged at the first stage outlet, and the first diffuser is a variable geometry diffuser.

### BRIEF DESCRIPTION OF THE DRAWINGS

The disclosure can be further understood by reference to the following detailed description when considered in connection with the accompanying drawings wherein:
Figure 1 is a highly schematic view of a heat pump system having an example centrifugal compressor with multiple stages.
Figure 2 is a cross-sectional view of an example two-stage centrifugal compressor of this disclosure.
Figure 3 is a schematic view of an economizer for the disclosed centrifugal compressor.
Figure 4 is a schematic view of one example variable geometry diffuser for the disclosed centrifugal compressor.

### DETAILED DESCRIPTION

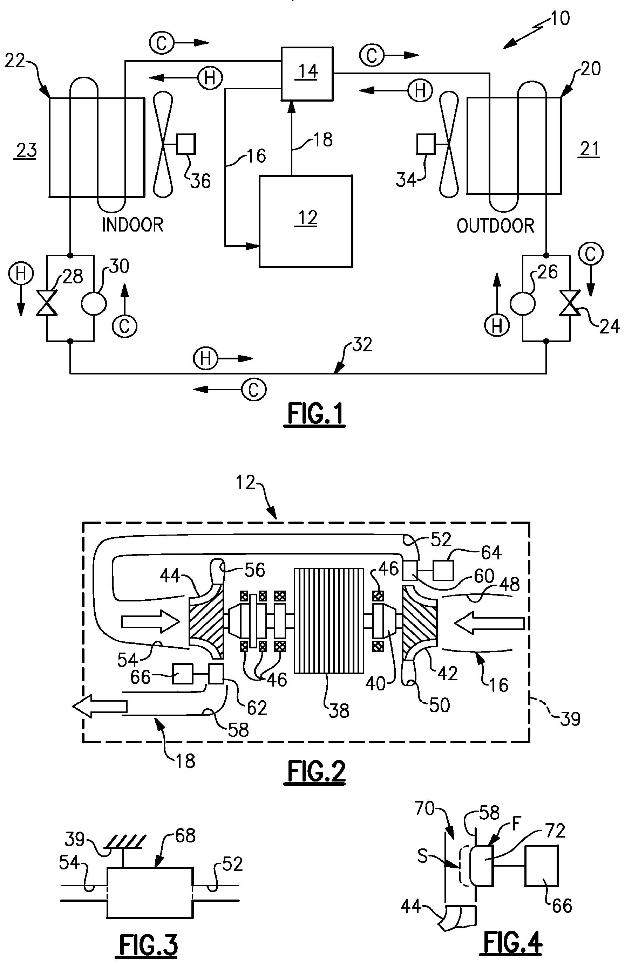

Referring to Figure 1, a heat pump system 10 includes a centrifugal compressor 12 for circulating a refrigerant in a refrigerant circuit 32. The centrifugal compressor 12 is arranged in the fluid circuit 32 and includes compressor inlet and outlet passages 16, 18 that are in fluid communication with a flow reversing device 14. The example heat pump system is exemplary of a high pressure ratio system. It should be understood the disclosed centrifugal compressor may be used in other high pressure ratio applications, such as certain air-cooled chiller or refrigeration systems.

First and second heat exchangers 20, 22 are fluidly arranged in the refrigerant circuit 32 and respectively arranged at first and second locations 21, 23, which may be indoors and outdoors in one example. In the example, blowers 34, 36 are respectively associated with each heat exchanger for transferring heat between each heat exchanger and its surrounding environment. It should be understood, however, that although refrigerant-to-air heat exchangers are shown, a heat exchanger may be used that transfers heat between the refrigerant and another fluid, such as water.

The flow reversing device 14 selectively changes the direction of flow in the refrigerant circuit 32 between the first and second heat exchangers 20, 22. In the example arrangement, an "H" depicts a heating direction of refrigerant flow, and a "C" shows a cooling direction of refrigerant flow.

A first bypass valve 24 and a first thermal expansion valve 26 are associated with the first heat exchanger 20. A second bypass valve 28 and a second thermal expansion valve 30 are associated with the second heat exchanger 22. The bypass valves 24, 28 act as check valves to permit flow in only one direction.

In operation, with the flow reversing device 14 actuated to a cooling configuration, the refrigerant flows to the first heat exchanger 20 where heat is rejected to the first location 21. Refrigerant then flow through the bypass valve 24 and is expanded through thermal expansion device 30. The refrigerant is vaporized and then enters the second heat exchanger 22 where the second location 23 rejects heat to the refrigerant before being returned to the centrifugal compressor 12. With the flow reversing device 14 actuated to a heating configuration, the refrigerant flows to the second heat exchanger 22 where heat is rejected to the second location 23. Refrigerant then flow through the bypass valve 28 and is expanded through thermal expansion device 26. The refrigerant is vaporized and then enters the first heat exchanger 20 where the first location 21 rejects heat to the refrigerant before being returned to the centrifugal compressor 12. The heat pump system 10 is intended to be exemplary only.

Referring to Figure 2, the centrifugal compressor 12 includes a housing 39 within which an electric motor 38 is arranged. The housing 38 is schematically depicted and may comprise one or more pieces. The electric motor 38 rotationally drives first and second impellers 42, 44 via a rotor shaft 40 about an axis to compress the refrigerant in a two-stage compressor configuration. The rotor shaft 40 may comprise one or more pieces. Although two compressor stages are shown, the disclosure may also be used in a compressor having more stages. In the example shown, the first and second impellers 42, 44 are located on opposing ends of the rotor shaft 40. The impellers are centrifugal such that the impeller inlet is arranged axially and the impeller outlet is arranged radially.

An oil-free bearing arrangement is provided for support of the rotor shaft 40 so that oil-free refrigerant can be used in the centrifugal compressor 12. In the example, the rotor shaft 40 is rotationally supported relative to the housing 39 by magnetic bearings 46, which are illustrated in a schematic fashion. The magnetic bearings 46 may include radial and/or axial magnetic bearing elements, for example. A bearing controller (not shown) communicates with the magnetic bearing 46 providing a magnetic bearing command to energize the magnetic bearings 46. The magnetic bearings create a magnetic field levitating the rotor shaft 40 and controls its characteristics during operation of the centrifugal compressor 12. It should be understood that the disclosed diffuser arrangements may also be used with air bearings or other types of bearings.

One example electric motor 38 includes a rotor supporting multiple magnets about its circumference. A stator is arranged about the rotor to impart rotational drive to the rotor shaft 40 when energized. In one example, a motor controller (not shown) communicates with the stator and provides a variable speed command to rotationally drive the impellers 43, 44 at a variable speed depending upon compressor operating conditions. The motor controller communicates with multiple sensors (not shown) to monitor and maintain the compressor operating conditions.

The first and second impellers 42, 44 are arranged in series relative to one another and providing a desired compressor pressure ratio, which in one example is at least 10:1. The first impeller 42 includes a first stage inlet 48 and a first stage outlet 52, and the second impeller 44 includes a second stage inlet 54 and a second stage outlet 58. First and second stage volutes 50, 56 are arranged respective at the first and second stage outlets 52, 58. The desired EP 12870829.4
compressor pressure ratio corresponds to a second stage outlet pressure to a first stage inlet pressure.

First and second diffusers 60, 62 are respectively arranged at the first and second stage outlets 52, 58 near the first and second stage volutes 50, 56. In one example, the first and second diffusers 60, 62 are variable geometry diffusers, which may be any suitable type. First and second actuators 64, 66 are configured to respectively move the first and second variable geometry diffusers between first and second positions. Referring to Figure 4, the second compressor stage is shown as an example. A passage 70 is arranged downstream from the second impeller 44. A variable geometry device, such as a movable wall 72, for example is arranged in the passage in the second stage outlet 58. The second actuator 66 moves the wall 72 between a first position F and a second position S to selectively regulate refrigerant flow through the passage 70.

Any number of variable geometry diffuser arrangements may be used. For example, a movable-wall variable-geometry diffuser includes a plurality of fixed wedge shaped vanes located downstream of the movable diffuser wall element. The movable wall element may be serrated with the trailing edge of the serration coinciding with the throat area (which is the smallest cross-sectional flow passage) of the vaned diffuser.

In another variable geometry diffuser example, a rotatable vane diffuser in the plane normal to the compressor axis. By rotating the vanes, the throat area of the diffuser changes, and, therefore, the capacity of the compressor, is adjusted.

In another variable geometry diffuser example, a split vaned diffuser has an outer diffuser ring and an inner diffuser ring. Throat area adjustment is obtained by rotating one diffuser ring with respect to the other one. Throat area of the fully opened diffuser is reduced as a result of the rotation of the inner diffuser ring relative to the outer diffuser ring.

An economizer 68 may be mounted to the housing 39, as shown in Figure 3. In one example, the economizer 68 is a heat exchanger-type economizer. The economizer 68 is arranged fluidly between the first stage outlet 52 and the second stage inlet 54.

Although two compressor stages are shown in Figure 2, the disclosure may also be used in a compressor having more stages. For the shown direct-drive gearless multistage compressors the impellers are arranged on opposing ends of the rotor shaft (the so-called back-to-back configuration) reducing the axial thrust load of the shaft. In one example three-stage configuration, only the first compressor stage includes a variable geometry diffuser, and the second and third stages may each include a volute without a diffuser and still achieve the desired compressor pressure ratio.

## Claims

1. A heat pump system (10) comprising:
a refrigerant circuit (32);
first and second heat exchangers (20, 22) arranged in the refrigerant circuit (32);
a flow reversing device (14) selectively changing a direction of flow in the refrigerant circuit (32) between the first and second heat exchangers (20, 22); and
a centrifugal compressor (12) arranged in the fluid circuit (32) and having first and second impellers (42, 44) arranged in series relative to one another and providing a desired compressor pressure ratio, wherein the first and second impellers (42, 44) respectively include first and second stage inlets and outlets (48, 52, 54, 58), and the desired compressor pressure ratio corresponds to a second stage outlet pressure to a first stage inlet pressure, **characterized in that** the centrifugal compressor (12) includes first and second diffusers (60, 62) respectively arranged at the first and second stage outlets (52, 58), and wherein the first and second diffusers (60, 62) are variable geometry diffusers, and the centrifugal compressor (12) includes first and second actuators (64, 66) configured to respectively move the first and second variable geometry diffusers (60, 62) between first and second positions (F, S).

2. The heat pump system according to claim 1, wherein the desired compressor pressure ratio is about 10:1.

3. The heat pump system according to claim 1, comprising an economizer (68) arranged fluidly between the first stage outlet (52) and the second stage inlet (54).

4. The heat pump system according to claim 1, wherein the centrifugal compressor (12) includes a variable speed motor (38) configured to rotationally drive the first and second impellers (42, 44).

5. The heat pump system according to claim 1, wherein the centrifugal compressor (12) includes a shaft (40) supporting the first and second impellers (42, 44), and magnetic bearings (46) support the shaft (40).

## Patentansprüche

1. Wärmepumpensystem (10), umfassend:
einen Kältemittelkreislauf (32);
einen ersten und einen zweiten Wärmetauscher (20, 22), die in dem Kältemittelkreislauf (32) angeordnet sind;
eine Strömungsumkehrvorrichtung (14), die selektiv eine Strömungsrichtung in dem Kältemittelkreislauf (32) zwischen dem ersten und dem zweiten Wärmetauscher (20, 22) ändert; und
einen Zentrifugalkompressor (12), der in dem Fluidkreis (32) angeordnet ist und ein erstes und ein zweites Flügelrad (42, 44) aufweist, die in Reihe zueinander angeordnet sind und ein gewünschtes Kompressordruckverhältnis bereitstellen, wobei das erste und das zweite Flügelrad (42, 44) jeweils einen Einlass und einen Auslass der ersten bzw. zweiten Stufe (48, 52, 54, 58) umfassen und das gewünschte Kompressordruckverhältnis einem Auslassdruck der zweiten Stufe zu einem Einlassdruck der ersten Stufe entspricht, **dadurch gekennzeichnet, dass** der Zentrifugalkompressor (12) einen ersten und einen zweiten Diffusor (60, 62) umfasst, die jeweils an dem Auslass der ersten bzw. der zweiten Stufe (52, 58) angeordnet sind, und wobei der erste und der zweite Diffusor (60, 62) Diffusoren mit variabler Geometrie sind und der Zentrifugalverdichter (12) einen ersten und einen zweiten Aktuator (64, 66) einschließt, die konfiguriert sind, um den ersten und den zweiten Diffusor mit variabler Geometrie (60, 62) jeweils zwischen der ersten und der zweiten Position (F, S) zu bewegen.

2. Wärmepumpensystem nach Anspruch 1, wobei das gewünschte Kompressordruckverhältnis etwa 10:1 beträgt.

3. Wärmepumpensystem nach Anspruch 1, umfassend einen Economizer (68), der strömungsmäßig zwischen dem Auslass (52) der ersten Stufe und dem Einlass (54) der zweiten Stufe angeordnet ist.

4. Wärmepumpensystem nach Anspruch 1, wobei der Zentrifugalkompressor (12) einen Motor (38) mit variabler Geschwindigkeit einschließt, der konfiguriert ist, um das erste und das zweite Flügelrad (42, 44) drehend anzutreiben.

5. Wärmepumpensystem nach Anspruch 1, wobei der Zentrifugalverdichter (12) eine Welle (40) einschließt, die das erste und das zweite Flügelrad (42, 44) trägt, und Magnetlager (46) die Welle (40) tragen.

## Revendications

1. Système de pompe à chaleur (10) comprenant :
un circuit réfrigérant (32) ;
des premier et deuxième échangeurs de chaleur (20, 22) disposés dans le circuit réfrigérant (32) ;
un dispositif d'inversion de flux (14) changeant sélectivement une direction de flux dans le circuit réfrigérant (32) entre les premier et deuxième échangeurs de chaleur (20 ; 22) ; et
un compresseur centrifuge (12) disposé dans le circuit de fluide (32) et comportant des premier et deuxième rotors (42, 44) disposés en série l'un par rapport à l'autre et fournissant un rapport de compression du compresseur souhaité, dans lequel les premier et deuxième rotors (42, 44) incluent respectivement des entrées et sorties de premier et deuxième étage (48, 52, 54, 58), et le rapport de compression du compresseur souhaité correspond à un rapport entre une pression de sortie de deuxième étage et une pression d'entrée de premier étage, **caractérisé en ce que** le compresseur centrifuge (12) inclut des premier et deuxième diffuseurs (60, 62) disposés respectivement au niveau des première et deuxième sorties (52, 58) et dans lequel les premier et deuxième diffuseurs (60, 62) sont des diffuseurs à géométrie variable, et le compresseur centrifuge (12) inclut des premier et deuxième actionneurs (64, 66) configurés pour déplacer respectivement les premier et deuxième diffuseurs à géométrie variable (60, 62) entre une première et une deuxième position (F, S).

2. Système de pompe à chaleur selon la revendication 1, dans lequel le rapport de compression du compresseur souhaité est d'environ 10:1.

3. Système de pompe à chaleur selon la revendication 1, comprenant un économiseur (68) disposé de manière fluide entre la sortie de premier étage (52) et l'entrée de deuxième étage (54).

4. Système de pompe à chaleur selon la revendication 1, dans lequel le compresseur centrifuge (12) inclut un moteur à vitesse variable (38) configuré pour entraîner de manière rotationnelle les premier et deuxième rotors (42, 44).

5. Système de pompe à chaleur selon la revendication 1, dans lequel le compresseur centrifuge (12) inclut une tige (40) supportant les premier et deuxième rotors (42, 44), et des paliers magnétiques (46) supportent la tige (40).
